# EUROPÄISCHE PATENTSCHRIFT

(11) **EP 3 389 992 B1**
(45) Veröffentlichungstag und Bekanntmachung des Hinweises auf die Patenterteilung: **16.08.2023**
(21) Anmeldenummer: 16834017.2
(22) Anmeldetag: 19.12.2016
(51) Int. Cl.: B29C 63/34

(54) **VERFAHREN ZUM AUSHÄRTEN EINES AUSKLEIDUNGSSCHLAUCHS**
METHOD FOR CURING A LINER TUBE
PROCÉDÉ PERMETTANT DE FAIRE DURCIR UN TUYAU DE REVÊTEMENT

(30) Priorität: 18.12.2015 DE 102015122313
(43) Veröffentlichungstag der Anmeldung: 24.10.2018
(73) Patentinhaber: RelineEurope GmbH, 76865 Rohrbach (DE)
(72) Erfinder: WIND, Herbert, 76857 Albersweiler (DE); NOLL, Christian, 67117 Limburgerhof (DE); REICHEL, Stefan, 67098 Bad Dürkheim (DE)
(74) Vertreter: Dr. Langfinger & Partner
(86) Internationale Anmeldenummer: PCT/DE2016/100601
(87) Internationale Veröffentlichungsnummer: WO 2017/101915

(56) Entgegenhaltungen:
- EP-A1- 1 959 183
- EP-A2- 2 037 246
- DE-A1- 19 817 413
- DE-A1-102010 011 610

## Beschreibung

Die vorliegende Erfindung betrifft ein Verfahren zum Aushärten eines Auskleidungsschlauchs.

Verfahren zur Sanierung von Leitungssystemen, in denen zum Beispiel flüssige oder gasförmige Medien transportiert werden, sind im Stand der Technik bekannt und vielfach beschrieben.

Beispielsweise sind Verfahren bekannt, bei denen die einen Defekt oder eine Beschädigung aufweisenden Abschnitte des Leitungssystems durch neue Abschnitte ersetzt werden. Dies ist jedoch aufwendig und auch nicht immer möglich.

Des weiteren sind Verfahren im Stand der Technik bekannt, bei denen zur Sanierung von Leitungssystemen, z.B. von Kanälen und ähnlichen Rohrsystemen, eine flexibler, mit einer mit härtbaren Harz getränkte aushärtbare Lage, die als Auskleidungsschlauch, auch als Liner bezeichnet, dient, in das Leitungssystem eingeführt wird. Nach dem Einführen wird der Auskleidungsschlauch aufgeweitet, so dass er sich eng an die Innenwand des Leitungssystems anschmiegt. Anschließend wird das Harz ausgehärtet.

Die Herstellung eines derartigen Auskleidungsschlauches ist beispielsweise in der WO 95/04646 beschrieben. Ein solcher Auskleidungsschlauch weist üblicherweise eine lichtundurchlässige äußere Schutzfolie, eine mindestens für bestimmte Wellenlängenbereiche elektromagnetischer Strahlung durchlässige Innenfolie sowie eine mit einem Harz getränkte aushärtbare Lage auf, die zwischen der Innenfolie und der Außenfolie angeordnet ist.

Der Aussenfolienschlauch soll verhindern, dass das zur Imprägnierung verwendete Harz aus der aushärtbaren Lage austritt und in die Umwelt gelangt. Dies setzt eine gute Dichtigkeit und Anbindung des äußeren Folienschlauchs an die harzgetränkte aushärtbare Lage voraus.

Aus der WO 00/73692 A1 ist ein Auskleidungsschlauch bekannt umfassend einen Innenfolienschlauch, ein mit einem Harz getränktes Faserband als aushärtbare Lage und einen Außenschlauch, der an seiner Innenseite mit einem Faservlies kaschiert ist.

Oftmals wird das harzgestränkte Faserband auf den Innenschlauch eines Auskleidungsschlauchs zu dessen Herstellung schraubenförmig und überlappend aufgewickelt. Der Außenschlauch wird anschließend ebenfalls schraubenförmig und überlappend um das harzgetränkte Faserband gewickelt. Als härtbare Harze werden im Stand der Technik ungesättigte Polyesterharze, Vinylesterharze oder Epoxydharzeverwendet, die beispielsweise in Styrol und/oder einem Acrylester gelöst sein können. Diese ungesättigten Polyester- oder Vinylester können thermisch (üblicherweise durch Peroxidkatalysatoren) oder mittels Strahlung, z.B. durch UV-Licht mit Photoinitiatoren, wie beispielsweise in der EP-A 23634 beschrieben, ausgehärtet werden. Auch so genannte Kombinationshärtungen mit einem für die thermische Härtung verwendeten Peroxidinitiator in Kombination mit Photoinitiatoren sind möglich und haben sich insbesondere bei großen Wandstärken der Auskleidungsschläuche als vorteilhaft erwiesen. Ein Verfahren für eine derartige sogenannte Kombinationshärtung ist beispielsweise in der EP-A 1262708 beschrieben. Ungesättigte Polyesteroder, Vinylesterharze unterliegen bei der Härtung einem Schwund, was die Stabilität des sanierten Leitungssystems im späteren Betrieb beeinträchtigen kann. Epoxydestherharze weisen hingegen eine bessere Dimensionsstabilität bei der Aushärtung nach Einbringung auf.

Der Innenschlauch selber wird dabei zur vereinfachten Herstellung auch um einen Wickeldorn gewickelt. Alternativ offenbart beispielsweise WO 95/04646 das ein vorgefertigter Innenfolienschlauch aufgeblasen werden und selbst als Wickeldorn dienen kann. Ein solcher vorgefertigter Innenfolienschlauch wird dabei aus einem Folienband hergestellt, dessen Folienränder miteinander durch Schweißen oder Kleben miteinander verbunden werden, um den Innenfolienschlauch zu bilden.

Die Auskleidungsschläuche werden vor dem Aushärten in die zu sanierenden Leitungssystem eingeführt und mittels eines Fluids, i.d.R. Druckluft, aufgeblasen. Für ein Aufblasen des Auskleidungsschlauchs wird ein Öffnungsende des Auskleidungsschlauchs gemäß dem Stand der Technik mit Druckluft beaufschlagt und das gegenüberliegende Öffnungsende des Auskleidungsschlauchs mit einer Verschlussvorrichtung, einem sogenannten Packer, verschlossen. Diese Verschlussvorrichtung umfasst dabei einen Hohlzylinder und ein Abdeckelement, mit welchem der Hohlzylinder verschlossen werden kann.

In den Auskleidungsschlauch wird zum Aushärten desselben eine Aushärtevorrichtung eingeführt, die eine Strahlungsquelle aufweist, und die durch den Auskleidungsschlauch geführt wird, um mit der Strahlungsenergie die Aushärtung der aushärtbaren Lagen des Auskleidungsschlauchs zu aktivieren bzw. vorzunehmen. Dabei ist eine vollständige Aushärtung der Auskleidungsschläuche von großer Bedeutung, d.h. es muss eine bestimmte Menge Strahlungsenergie an jeden Punkt des Auskleidungsschlauchs in diesen eingebracht werden. Die Menge an Strahlungsenergie hängt dabei von der Leistungsabgabe der Strahlungsquellen sowie der Geschwindigkeit ab, mit der diese durch den Auskleidungsschlauch durchgeführt werden.

DE19817413 A1 offenbart ein Verfahren zur Regelung der Geschwindigkeit einer Aushärtung eines Auskleidungsschlauchs. Dabei werden eine oder mehrerer UV- Lichtquellen mittels eines zentral geführten Zugkabels durch das Rohr geführt, wodurch das Harz der aushärtbaren Lage des Auskleidungsschlauchs gehärtet wird. Die Steuerung der Geschwindigkeit, mit der die Lichtquellen gezogen werden, erfolgt dabei in Abhängigkeit von der durch die exotherme Härtungsreaktion erzeugten Temperatur an der inneren Oberfläche des Schlauchs. Im Bereich der Lichtquellen werden eine Reihe IR-Sensoren mitgeführt, die im selben Winkel auf eine - parallel zum Zugkabel verlaufende - fiktive Linie an der inneren Oberfläche des Schlauchs ausgerichtet sind. Auf dieser Linie sind bestimmte Messpunkte definiert, wobei während des Vorbeiziehens der Sensoren an den Messpunkten die Temperatur an jedem Messpunkt durch die Sensoren gemessen wird.

Grundsätzlich ist es gemäß dem Stand der Technik somit bekannt, anhand von diskontinuierlichen Messpunkten an der Innenseite des Auskleidungsschlauchs die Temperatur zu bestimmen, um die Geschwindigkeit des Vortriebs einer Aushärtevorrichtung zu regeln.

Aus EP 1 959 183 B1 ist eine Vorrichtung bekannt, die mittels gekühlter LEDs die Strahlungsenergie für die Aushärtung eines Auskleidungsschlauchs bereitstellt. Dabei erfolgt die Regelung der Aushärtung bzw. das Bewegen der Vorrichtung zum Aushärten durch den Auskleidungschlauchs mittels gemessener Temperaturwerte in dem Auskleidungsschlauch.

EP 2037246 A1 beschreibt Verfahren zur Überwachung des Zustandes einer Auskleidung in einem Rohr- oder Kanalsystem angegeben werden, welches über einen langen Zeitraum vornehmbar ist, wobei zeitlich einmalige oder zeitlich beliebig wiederholbare Messungen möglich sind. Dabei wird nicht offenbart, dass für lichthärtende Auskleidungsschläuche zwischen einer Außenfolie und einer aushärtbaren Lage angeordnet ist.

Nachteilig an den bekannten Lösungen ist jedoch, dass zum einen keine Regelung der Geschwindigkeit des Vortriebs basierend auf exakten Temperaturmessdaten erfolgt, sondern Messungen nur an bestimmten Messpunkten stattfinden, sowie dass auf der Innenseite des Auskleidungsschlauchs gemessen wird. Gerade bei Auskleidungsschläuchen mit aushärtbaren Lagen mit größerem Durchmesser oder mit einer hohen Wandstärke ist es entscheidend, dass diese vollständig durchhärten. Basierend auf einer Temperaturmessung auf der Innenseite eines Auskleidungsschlauchs kann somit ausschließlich indirekt auf die Durchhärtung desselben geschlossen werden.

Des weiteren ist es nachteilig, dass die Leistungsabgabe der Strahlungsquelle innerhalb des Leitungssystems nicht zwingend gleichmäßig erfolgt und somit eine Temperaturmessung an der Innenseite der Leitungen keine sichere Aussage über die Aushärtung der Auskleidungsschläuche ermöglicht. Bei Leitungen mit einem kreisrunden Querschnitt ist eine gleichmäßige Leistungsabgabe der Strahlungsquellen zwar in der Regel realisierbar, bei beispielsweise ovalen bzw. eiförmigen Querschnitten der Leitungen jedoch nicht, da der Abstand der Strahlungsquellen auf der Aushärtevorrichtung zu der Innenwand entlang des Querschnitts unterschiedlich ist.

Zudem können Wasserablagerungen im unteren Bereich der Leitungen die Aushärtung negativ beeinflussen, da aufgrund der Wasserablagerungen auch bei gleichmäßiger Leistungsabgabe der Strahlungsquellen eine ungleichmäßige Aushärtung vorliegt.

Demzufolge lag der vorliegenden Erfindung die Aufgabe zugrunde, die Nachteile des Stands der Technik zu überwinden, und insbesondere ein Verfahren zu liefern, welches eine Aushärtung eines Auskleidungsschlauchs mit hoher Präzision sicherstellt, in dem die abgegebene Strahlungsenergie basierend auf Temperaturmesswerten optimal geregelt wird.

Diese Aufgabe wird insbesondere gelöst durch ein Verfahren nach Anspruch 1.

Erfindungsgemäß hat es sich als vorteilhaft erwiesen, die Temperaturmessvorrichtung zur Messung der Temperatur von der Innenseite an die Außenseite der aushärtbaren Lage des Auskleidungsschlauchs zu verlagern. Durch eine Messung der Temperatur an der Außenseite des Auskleidungsschlauchs kann sichergestellt werden, dass eine ausreichende Aktivierung der aushärtbaren Lage stattgefunden hat, um diese vollständig durchzuhärten.

Dabei ist es nicht mehr von Relevanz, ob durch unterschiedliche Abstände der Strahlungsquellen je nach Querschnitt der Leitungen oder Wasserablagerungen im unteren Bereich der Leitung die Messung des Aushärtevorgangs verfälschen werden kann, wie bei einer Messung der Temperatur an der Innenseite des Auskleidungsschlauchs, sondern vielmehr wird darauf abgestellt, ob der Auskleidungsschlauch bis zu seiner Außenseite durchgehärtet ist. Die Zuverlässigkeit des Aushärteverfahrens wird somit durch das erfindungsgemäße Verfahren optimiert.

Des weiteren hat es sich gezeigt, dass eine wesentlich verbesserte Regelung der Aushärtung erfolgen kann, wenn diese auf einer Vielzahl von Messpunkten oder einer kontinuierlichen Temperaturmessung durchgeführt wird.

Im Stand der Technik ist die Messung der Temperatur an der Außenseite von Auskleidungsschläuchen prinzipiell beschrieben. Diese Messungen erfolgen aber nicht bei der Aushärtung von Auskleidungsschläuchen mittels Strahlungsquellen, sondern bei der sogenannten Warmwasseraushärtung. Bei der Warmwasseraushärtung härtet der Auskleidungsschlauch durch eine Zugabe von Energie in Form von Wasserdampf oder heißen Warmwasser aus. Die thermische Aushärtung des Auskleidungsschlauchs und der dabei entstehende Temperaturanstieg wird in der Regel dabei gemessen und für die Überwachung des Aushärtungsvorgangs des Auskleidungsschlauchs herangezogen.

Der wesentliche Unterschied zwischen dem vorliegenden erfindungsgemäßen Verfahren, dass eine Aushärtung der Auskleidungsschläuche mittels Strahlungsquellen vorsieht, und der Warmwasseraushärtung liegt nunmehr darin, dass bei der Warmwasserhärtung wenige stichprobenhafte Messungen ausreichen, um die Temperatur des Wasserdampfs oder des Warmwassers nachzuregeln, da diese sich nur graduell über die Länge des Auskleidungsschlauchs ändert.

Das Durchfahren eines Auskleidungsschlauches mittels einer Strahlungsquelle setzt dabei für eine zuverlässige Aushärtung wesentliche exaktere Messwerte entlang desselben voraus, da die jeweils notwendige Strahlungsenergie an jedem Punkt des Auskleidungsschlauchs ausreichend sein muss, um diesen durchzuhärten.

Dies wird erfindungsgemäß dadurch erreicht, dass die Steuerung oder Regelung der abgegebenen Strahlungsenergie anhand einer Vielzahl von Messpunkten oder kontinuierlich erfolgt.

Auch kann gemäß einer Ausführungsform der vorliegenden Erfindung ein Anzeigen einer grafischen Repräsentation der von der Temperaturmesseinrichtung erfassten Temperatur auf einer Anzeigeeinrichtung vorgesehen ist, wobei insbesondere eine erste grafische Repräsentation für eine erste Temperatur angezeigt wird, bei der der Auskleidungsschlauch noch nicht ausgehärtet ist und eine zweite grafische Repräsentation angezeigt wird, wenn Auskleidungsschlauch ausgehärtet ist.

Besonders vorteilhaft wird eine grafische Repräsentation der Temperatur an jedem Messpunkt der Vielzahl der Messpunkte angezeigt, besonders vorteilhaft von denjenigen Messpunkten im Wirkbereich der Aushärtevorrichtung und/oder um den Wirkbereich der Aushärtevorrichtung.

Es hat sich gezeigt, dass es für einen Bediener einfacher ist, eine grafische Repräsentation der Temperatur als Indikator für eine erfolgte Aushärtung zu erfassen, als auch die gemessene Temperaturwerte selbst zurückzugreifen. Die notwendige Temperatur an der Außenseite hängt von verschiedenen Faktoren ab, beispielsweise der Dicke des Auskleidungsschlauchs, der verwendeten Harze, etc. Eine grafische Repräsentation, beispielsweise in Form einer farblichen Indikation in "rot" für noch nicht ausgehärteten und in "grün" für einen ausgehärteten Abschnitt ermöglicht ein verbessertes Erfassen des Zustands des Auskleidungsschlauchs.

Besonders vorteilhaft kann dabei vorgesehen sein, dass die grafische Repräsentation abschnittsweise erfolgt, insbesondere im oder um den Wirkbereich der Aushärtevorrichtung. Insbesondere bei langen Auskleidungsschläuchen kann somit immer der für den Benutzer relevante Abschnitt in einer gewünschten Größe angezeigt werden.

Dabei kann es selbstverständlich vorgesehen sein, dass die entsprechenden Messwerte protokolliert werden, um einen Nachweis über das Aushärteverfahren und die erfolgreiche Aushärtung zu sichern.

Dabei kann es bevorzugt sein, dass ein Benutzer die Geschwindigkeit der Fortbewegung und/oder die Leistungsabgabe der Strahlungsquelle anhand der mindestens einen grafischen Repräsentation steuert.

Auch kann es vorgesehen sein, dass eine Regelungseinrichtung die Geschwindigkeit der Fortbewegung der Aushärtevorrichtung durch den Auskleidungsschlauch und/oder die Leistungsabgabe der Aushärtevorrichtung basierend auf der von der Temperaturmesseinrichtung erfassten Temperatur automatisiert regelt.

Ein automatisches Fortbewegen der aktivierten Aushärtevorrichtung, wobei die Fortbewegung der Aushärtevorrichtung in dem Auskleidungsschlauch und/oder die Leistungsabgabe der Aushärtevorrichtung in Abhängigkeit der durch die Temperaturmesseinrichtung erfassten Temperatur an der Außenseite der aushärtbaren Lage gesteuert oder geregelt wird, ist vorteilhaft gegenüber den aus dem Stand der Technik bekannten Lösungen. Ein solches automatisches Fortbewegen kann dabei durch die im Allgemeinen verwendeten Kabel, insbesondere umfassend Kevlarfasern und/oder mindestens eine Zugseil, und/oder Zugseile erfolgen, wobei in diesem Fall die Zuggeschwindigkeit basierend auf den erfassten Temperaturmesswerten geregelt wird, es können aber auch alternativ oder zusätzlich Aushärtevorrichtungen zum Einsatz kommen, die eine eigene Antriebseinrichtung umfassen, deren Vortrieb durch die erfassten Temperaturmesswerte eingeregelt wird. Dabei ist insbesondere vorgesehen, dass obere und untere Schwellwerte definiert oder definierbar sind, wobei bei einem Erreichen oder Überschreiten eines oberen Schwellwerts der Temperatur die Fortbewegung der Aushärtevorrichtung beschleunigt wird und/oder die Leistungsabgabe der der Aushärtevorrichtung verringert wird und bei einem Erreichen oder Unterschreiten eines unteren Schwellwerts der Vortrieb der Aushärtevorrichtung reduziert wird und/oder die Leistungsabgabe der Aushärtevorrichtung erhöht wird.

Erfindungsgemäß kann vorgesehen sein, dass die Aushärtevorrichtung als Strahlungsquelle eine Gasentladungslampe, eine Kurzbogenlampe, eine Stroboskoplampe, eine Blitzlampe, Licht emittierende Dioden (LEDs), eine Bogenlampe, insbesondere eine Xenon-Lampe, und/oder einer Quecksilber-Xenon-Lampe umfasst, wobei insbesondere wobei das Leuchtmittel mindestens zehn Prozent (10%), vorzugsweisen mindestens fünfzig Prozent (50%) der Strahlungsenergie in einem Wellenlängenbereich von 351 bis 800 nm, insbesondere in einem Bereich von 380 nm bis 800 nm, insbesondere in einem Bereich von 380 nm bis 700 nm, bevorzugt in einem Bereich von 390 nm bis 470 nm, oder in einem Bereich von 400 nm bis 800 nm, bereitstellt oder bereitstellen kann.

Die Auskleidungsschläuche weisen in der Regel als aushärtbare und/oder aushärtende Lage ein oder mehrere Faserbänder auf, die mit einem härtbaren Harz getränkt sind. Als Faserbänder eignen sich dabei grundsätzlich alle dem Fachmann bekannten Produkte in Form von Geweben, Gewirken, Gelegen, Matten oder Vliesen, die Fasern in Form von langen Endlosfasern oder kurzen Fasern enthalten können. Entsprechende Produkte sind dem Fachmann an sich bekannt und in großer Vielfalt von verschiedenen Herstellern kommerziell erhältlich. Solche Auskleidungsschläuche lassen sich mit erfindungsgemäßen Strahlungsquellen optimal aushärten.

Im Rahmen der vorliegenden Erfindung sollen als Faserbänder im Sinne der Erfindung auch Filze verstanden werden. Ein Filz ist ein Flächengebilde aus einem ungeordneten, nur schwer zu trennendem Fasergut. Prinzipiell sind Filze damit nicht gewebte Textilien. Aus Chemiefasern und Pflanzenfasern werden Filze in der Regel durch trockene Vernadelung (sog. Nadelfilze) oder durch Verfestigung mit unter hohem Druck aus einem Düsenbalken austretenden Wasserstrahlen hergestellt. Die einzelnen Fasern im Filz sind ungeordnet miteinander verschlungen. Filze weisen eine gute Temperaturbeständigkeit auf und sind in der Regel feuchtigkeitsabweisend, was bei der Anwendung in flüssigkeitsführenden Systemen von Vorteil sein kann.

Die Länge der verwendeten Fasern unterliegt keiner besonderen Beschränkung, d.h. es können sowohl so genannte Langfasern als auch Kurzfasern oder Faserbruchstücke verwendet werden. Über die Länge der verwendeten Fasern lassen sich die Eigenschaften der entsprechenden Faserbänder auch über weite Bereiche einstellen und steuern.

Auch die Art der verwendeten Fasern unterliegt keiner Beschränkung. Nur beispielhaft seien hier Glasfasern, Carbonfasern oder Kunststofffasern wie Aramidfasern oder Fasern aus thermoplastischen Kunststoffen wie Polyestern oder Polyamiden oder Polyolefinen (z.B. Polypropylen) genannt, die dem Fachmann mit ihren Eigenschaften bekannt und in großer Vielzahl kommerziell erhältlich sind. Aus wirtschaftlichen Gründen werden in der Regel Glasfasern bevorzugt; ist jedoch beispielsweise eine besondere Hitzebeständigkeit von Bedeutung, können beispielsweise Aramidfasern oder Carbonfasern eingesetzt werden, die hinsichtlich der Festigkeit bei höheren Temperaturen Vorteile gegenüber Glasfasern bieten können.

Die Auskleidungsschläuche können ein oder mehrere Faserbänder enthalten, die zudem gleich oder unterschiedlich sein können. Weitere geeignete Kombinationen mehrerer Faserbänder sind in der WO 201 1/006618 beschrieben, auf die an dieser Stelle vollinhaltlich Bezug genommen wird. Auch die WO 2003/038331 beschreibt Faserbänder bzw. Endlosstoffe mit geeignetem Aufbau.

Es kann gemäß einer Ausführungsform auch vorgesehen sein, dass ein Messen der Temperatur mittels der Temperaturmessvorrichtung mittels mindestens eines Temperaturmesselements erfolgt,, welches sich entlang der Längsrichtung des Auskleidungsschlauchs erstreckt, insbesondere von einem öffnungsseitigen Ende des Auskleidungsschlauchs zu einem gegenüberliegenden öffnungsseitigen Ende des Auskleidungsschlauchs, so dass eine Temperatur an der Außenseite der aushärtbaren Lage, zumindest bereichsweise, entlang der gesamten Länge des Auskleidungsschlauchs erfasst wird und/oder die Temperaturmessvorrichtung mindestens zwei, insbesondere n, mit n = 1, 2, 3, 4, 5, 6, 7, 8, 9, 10 oder mehr, Temperaturmesselemente umfasst, welches entlang der Längsrichtung des Auskleidungsschlauchs beabstandet zueinander angeordnet sind, insbesondere in einem regelmäßigen Abstand, wobei jedes der mindestens zwei Temperaturmesselemente die Temperatur an der Außenseite der aushärtbaren Lage entlang eines Längsabschnitts des Auskleidungsschlauchs erfasst oder erfassen kann, und wobei die Temperaturmessvorrichtung insbesondere in den Auskleidungsschlauch integriert ist, vorzugsweise zwischen der Außenseite der aushärtbaren Lage und einer äußeren Schutzfolie.

Durch ein erfindungsgemäßes Temperaturmesselement, welches sich entlang der gesamten Länge des Auskleidungsschlauchs erstreckt, kann eine präzise Regelung der Leistungsabgabe und/oder der Vortriebsgeschwindigkeit der Aushärtevorrichtung entlang des vollständigen Auskleidungsschlauchs erfolgen. Alternativ kann auch vorgesehen sein, dass ein Erfassung der Temperatur an bestimmten Messpunkten oder Messbereichen erfolgt, welche beabstandet zueinander in Längsrichtung entlang des Auskleidungsschlauchs angeordnet sind. Dabei kann erfindungsgemäß sowohl vorgesehen sein, dass die Temperaturmesseinrichtung bzw. mindestens eines der Temperaturmesselemente in den Auskleidungsschlauch integriert ist, vorzugsweise zwischen der aushärtbaren Lage und einer äußeren Schutzfolie. Alternativ oder zusätzlich kann auch vorgesehen sein, dass die Temperaturmesseinrichtung vor Einziehen des Auskleidungsschlauchs in die zu sanierende Leitung in diese eingebracht wird, beispielsweise indem Temperaturmesselemente mittels Kleben, Schrauben, Tackern, und dergleichen, an der Innenseite der zu sanierenden Leitung angebracht werden.

Dabei kann bevorzugt sein, dass das Temperaturmesselement in Form eines Kabels, insbesondere in Form eines Flachbandkabels, vorzugsweise umfassend einen faseroptischen Sensor, ausgebildet ist.

Ein Flachbandkabel hat insbesondere den Vorteil, dass diese einfach auf die aushärtbare Lage des Auskleidungsschlauchs auflegbar ist. Dies kann mit einfachen Mitteln während der Herstellung des Auskleidungsschlauchs erfolgen. Ein Flachbandkabel weist dabei den Vorteil auf, dass dieses an einem Stück mit eingebracht werden kann und keinen großen Höhenunterschied zu dem umliegenden Auskleidungsschlauch verursacht. Ein solcher geringer Höhenunterschied hat insbesondere den Vorteil, dass das Kabel ein Einziehen des Auskleidungsschlauchs in eine Leitung nicht negativ beeinträchtig, in dem sich die Sensorik in Unebenheiten der Leitung verhakt. Zudem sinkt das Risiko von Beschädigungen.

Des weiteren weist ein Flachbandkabel den Vorteil auf, dass dieses, sofern die eigentliche Sensorik in der neutralen Phase des Flachbandkabels angeordnet ist, die Sensorik vor Beschädigungen beim Falten des Auskleidungsschlauchs schützt. Dieser wird für den Transport meanderförmig in Kisten gelegt, wobei jeweils 180° Biegungen des Schlauches notwendig werden. Eine in der neutralen Phase eines Flachbandkabels angeordnete Sensorik wird dabei ausschließlich geringen Biegebelastungen ausgesetzt und nicht beschädigt. Auch ist vorteilhaft, dass im Gegensatz zu einem runden Kabel die Gefahr einer Torsion in Längsrichtung reduziert wird und die Lage der Messsensorik in dem Flachbandkabel fixiert werden kann.

Erfindungsgemäß kann es dabei ebenfalls bevorzugt sein, dass das Flachbandkabel ein optisches Sensorkabel ausbildet, welches eine Kabelseele und einen Kabelmantel umfasst, wobei die Kabelseele einen Licht mit einer Wellenlänge in einem Bereich von 200 bis 480nm leitenden Lichtwellenleiter umfasst, der ein Coating aufweist, welches für Licht mit einer Wellenlänge in einem Bereich von 200 bis 480nm transparent ist und mantelseitig eingestrahltes Licht einkoppelt und in Längsrichtung weiterleitet, und wobei der Kabelmantel einen im Querschnitt flachen Profilkörper ausbildet, in den der Lichtwellenleiter in der neutralen Phase des Kabelmantel eingebracht ist, und wobei der Kabelmantel einen transparenten Bereich aufweist, der lichtdurchlässig ist, ausgelegt und eingerichtet, um Licht von der Außenseite des Kabelmantel zum Lichtwellenleiter weiterzuleiten.

Dabei kann vorgesehen sein, dass der Lichtwellenleiter einen Kern aus Quarz, ein Cladding aus Fluor-dotiertem Quarz und ein Coating aus einem Kunststoff umfasst.

Des Weiteren kann vorgesehen sein, dass die Kabelseele einen zweiten Lichtwellenleiter umfasst, insbesondere beabstandet von dem ersten Lichtwellenleiter, der ausgelegt und eingerichtet zur Erfassung der Raman-Streuung bei einem faseroptischen Messverfahren ist, insbesondere umfassend einen Germanium-dotierten Faserkern.

Alternativ kann vorgesehen sein, dass die Temperaturmessvorrichtung einen Lichtwellenleiter umfasst, der ausgelegt und eingerichtet zur Erfassung der Raman-Streuung bei einem faseroptischen Messverfahren ist, insbesondere umfassend einen Germanium-dotierten Faserkern.

Sowohl der erste als auch der zweite Lichtwellenleiter können lose, als Hohlader-Aufbau, oder mit einer transparenten Umhüllen eingebracht werden. Als vorteilhaft haben sich Lichtwellenleiter mit einem Kerndurchmesser in einem Bereich von 50µm bis 200µm, insbesondere von 110µm erwiesen. Dabei weisen die Lichtwellenleiter einen Kren aus Reinstquarz, ein Cladding aus Fluor-dotiertem Quarz und ein Coating aus einem transparenten Kunststoff auf. Die Brechzahl eines solchen Lichtwellenleiter ist üblicherweise N = 1,46 für den Kern und eine geringere Brechzahl als 1,46 für das Cladding. Der Profilkörper ist dabei derart ausgelegt und eingerichtet, dass er bei einer Biegung von 180°-Umlenkung bruchfest ist.

Der erste Lichtwellenleiter liegt dabei im transparenten Bereich während der zweite Lichtwellenleiter außerhalb des transparenten Bereichs angeordnet ist. Vorzugsweise ist dieser zweite Bereich eingefärbt, also nicht transparent. Dabei ist der zweite Lichtwellenleiter ein zur Temperaturmessung geeigneter faseroptischer, ortsaufgelöster zur Temperaturmessung geeigneter Lichtwellenleiter.

Auch kann vorgesehen sein, dass ein Übermitteln von Temperaturmesswerten des Temperaturmesselements mittels eines RFID-Transponders an eine Auswerteeinrichtung erfolgt, wobei die Auswerteeinrichtung die Fortbewegung und/oder die Leistungsabgabe der Aushärtevorrichtung steuert oder regelt..

Dies hat sich insbesondere als vorteilhaft erwiesen, um Temperaturmesselemente als passive Elemente in einen Auskleidungsschlauch integrieren zu können, wobei auf durch den Auskleidungsschlauch durchgeführte elektrische Anschlussleitungen verzichtet werden kann

Insbesondere kann es vorteilhaft sein, dass ein Messen der Temperatur mitttels der Temperaturmesseinrichtung mittels eines Temperaturmesselements erfolgt, welches piezoelektrische Kristalle aus Quarz und/oder Lithiumniobat mit lithographisch aufgebrachten Elektrodenstrukuren umfasst, die ein ankommendes Funksignal in eine Oberflächenwelle, die sich über den Kristall ausbreitet, umwandelt, und wobei die reflektierten Oberflächenwellen in ein elektrisches Signal zurückrückwandelbar sind oder zurückgewandelt werden, wobei eine Temperaturänderung zu einer definierten detektierbaren Änderung des reflektierten Signals führt, so dass in Reaktion auf einen Anfrageimpuls und der Impulsantwort eine Temperaturmessung erfolgen kann bzw. erfolgt.

Diese Ausgestaltung weist insbesondere den Vorteil auf, dass ein rein passives Bauelement vorliegt, welches durch den Anfrageimpuls und der Auswertung der Impulsantwort ausgelesen werden kann, ohne das eine eigene, in das Temperatusmesselement integrierte, oder eine externe, Energieversorgung vorliegen muss. Die erfindungsgemäßen Temperaturmesselemente, die auch unter der Bezeichnung "surface acoustic wave" (SAW-) Transponder bekannt sind, können dabei unter hohen Temperaturen (400 °C) arbeiten und weisen sehr schnelle Reaktionszeiten im Mikrosekundenbereich auf. Somit können die erfindungsgemäßen Temperaturmesselementen an den gewünschten Stellen eines Auskleidungsschlauchs positioniert werden, ohne dass eine Verkabelung derselben erfolgt, wobei diese eine schnelle Reaktionsgeschwindigkeit bei einer hohen Temperaturbeständigkeit aufweisen.

Gemäß einer Ausführungsform der Erfindung kann auch vorgesehen sein, dass mindestens ein erster Schwellwert für eine erste Temperatur definiert wird und mindestens ein zweiter Schwellwert, höher als der erste Schwellwert, für eine zweite Temperatur definiert wird, wobei eine Geschwindigkeit der Fortbewegung der Aushärtevorrichtung durch den Auskleidungsschlauch bei einem Unterschreiten des ersten Schwellwerts verringert wird und bei einem Überschreiten des zweiten Grenzwerts erhöht wird und/oder die Leistungsabgabe der Aushärtevorrichtung bei einem Unterschreiten des ersten Grenzwerts erhöht und bei einem Überschreiten des zweiten Grenzwerts verringert wird.

Dabei kann es vorteihaft sein, dass die Schwellwerte in Abhängigkeit des auszuhärtenden Auskleidungsschlauchs, insbesondere in Abhängigkeit des Durchmessers der auszuhärtenden Lage des Auskleidungsschlauchs, festgelegt werden.

Durch definierte Schwellwerte kann eine optimierte Aushärtung sichergestellt werden. Dabei kann auch vorgesehen sein, dass die Schwellwerte an die konkreten Eigenschaften der spezifisch auszuhärtenden Auskleidungsschläuche angepasst werden. Dabei kann auch vorgesehen sein, dass der erste Schwellwert identisch mit dem zweiten Schwellwert seien kann.

Schließlich kann auch vorgesehen sein, dass ein Fortbewegen der Aushärtevorrichtung mittels eines Kabels, insbesondere eines Kabels umfassen Kevlarfasern und/oder mindestens ein Zugseil, und/oder Zugseils erfolgt, insbesondere mit einer Geschwindigkeit des Vortriebs in einem Bereich von 5 cm/min bis 200 cm/min.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert wird, ohne dadurch die Erfindung zu beschränken.

Dabei zeigt:
- Figur 1:: eine schematische Schnittansicht eines erfindungsgemäßen Auskleidungsschlauchs; und
- Figur 2:: eine schematische Ansicht eines Ablaufdiagramms eines erfindungsgemäßen Verfahrens.

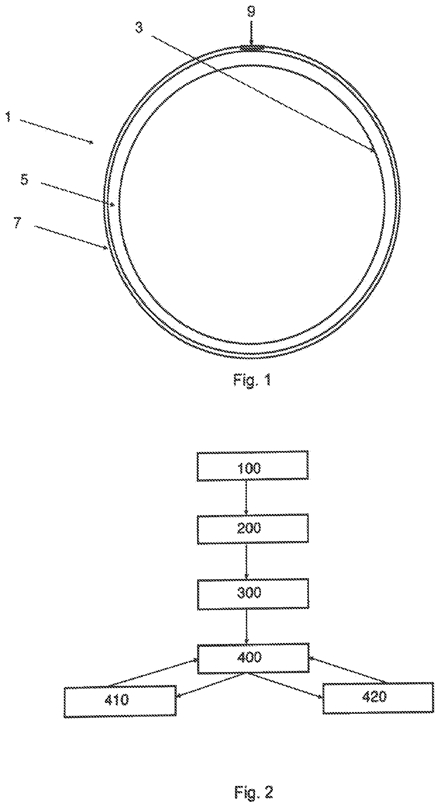

Figur 1 zeigt einen erfindungsgemäßen Auskleidungsschlauch 1 mit einer Innenfolie 3, einer aushärtbaren Lage 5 sowie einer Außenfolie 7. Zwischen der Außenfolie 7 und der aushärtbaren Lage 5 ist eine Temperaturmessvorrichtung 9 angeordnet.

In Figur 2 ist ein schematisches Ablaufdiagramm eines erfindungsgemäßen Verfahrens gezeigt. In einem ersten Schritt 100 wird ein erfindungsgemäßer Auskleidungsschlauch in eine zu sanierende Leitung eingeführt. Im nachfolgenden Verfahrensschritt 200 wird die Aushärtevorrichtung in den Auskleidungsschlauch eingebracht. Nach einbringen der Aushärtevorrichtung wird der Auskleidungsschlauch in einem Verfahrensschritt 300 mit Druck beaufschlagt, so dass dieser an den Wänden der zur sanierenden Leitung anliegt. In einem Verfahrensschritt 400 wird die Fortbewegung der Aushärtevorrichtung in dem Auskleidungsschlauch und/oder die Leistungsabgabe der Aushärtevorrichtung in Abhängigkeit der durch die Temperaturmesseinrichtung erfassten Temperatur an der Außenseite der aushärtbaren Lage gesteuert oder geregelt. Ist die gemessene Temperatur höher als ein erster Schwellwert, wird in einem Schritt 410 die Geschwindigkeit des Vortriebs der Aushärtevorrichtung erhöht und/oder die Leistungsabgabe der Strahlungsquelle reduziert. Ist die gemessene Temperatur niedriger als ein zweiter Schwellwert, so wird in einem Schritt 420 die Geschwindigkeit des Vortriebs der Aushärtevorrichtung verringert und/oder die Leistungsabgabe der Strahlungsquelle erhöht.

Die in der voranstehenden Beschreibung und den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Verfahren zum Sanieren von Leitungen, insbesondere von Kanälen, Schächten, oder dergleichen, umfassend die folgenden Verfahrensschritte, insbesondere in dieser Reihenfolge:
a. Einführen eines Auskleidungsschlauchs (1) in die Leitung, wobei der Auskleidungsschlauch (1) mindestens eine durch eine Aktivierung aushärtbare und/oder aushärtende Lage (5) sowie eine Außen um die aushärtbare Lage (5) angeordnete Außenfolie (7)umfasst, wobei der Auskleidungsschlauch (1) mindestens eine Temperaturmessvorrichtung (9), die ausgelegt und eingerichtet ist, eine Temperatur auf der Außenseite der aushärtbaren Lage (5) an einer Vielzahl von Messpunkten und/oder kontinuierlich zu messen, umfasst, die zwischen der aushärtbaren Lage (5) und der Außenfolie (7)angeordnet ist;
b. Einbringen einer Aushärtevorrichtung umfassend eine Strahlungsquelle, mit der die Aushärtung der aushärtbaren Lage (5) aktiviert wird, in den Auskleidungsschlauch;
c. Expandieren des Auskleidungsschlauchs, insbesondere mittels eines Fluids, vorzugsweise Druckluft, so dass der Auskleidungsschlauch (1) an der Innenwand der Leitung anliegt;
d. Fortbewegen der Aushärtevorrichtung durch das Leitungssystem, wobei die Aushärtevorrichtung zum Aushärten der aushärtbaren und/oder aushärtenden Lage (5) aktiviert wird oder ist, und wobei die Fortbewegung der Aushärtevorrichtung in dem Auskleidungsschlauch (1) und/oder die Leistungsabgabe der Strahlungsquelle der Aushärtevorrichtung in Abhängigkeit der durch die Temperaturmesseinrichtung erfassten Temperatur an der Außenseite der aushärtbaren Lage (5) gesteuert oder geregelt wird.

2. Verfahren nach Anspruch 1, **gekennzeichnet durch**
das Anzeigen einer grafischen Repräsentation der von der Temperaturmesseinrichtung erfassten Temperatur auf einer Anzeigeeinrichtung, wobei insbesondere eine erste grafische Repräsentation für eine erste Temperatur angezeigt wird, bei der der Auskleidungsschlauch (1) noch nicht ausgehärtet ist und eine zweite grafische Representation angezeigt wird, wenn Auskleidungsschlauch (1) ausgehärtet ist.

3. Verfahren nach Anspruch 2, **dadurch gekennzeichnet, dass**
eine grafische Repräsentation der Temperatur an jedem Messpunkt der Vielzahl der Messpunkte angezeigt wird, insbesondere von denjenigen Messpunkten im Wirkbereich der Aushärtevorrichtung und/oder um den Wirkbereich der Aushärtevorrichtung.

4. Verfahren nach einem der Ansprüche Anspruch 2 oder 3, **dadurch gekennzeichnet, dass**
ein Benutzer die Geschwindigkeit der Fortbewegung und/oder die Leistungsabgabe der Strahlungsquelle anhand der mindestens einen grafischen Repräsentation steuert.

5. Verfahren nach einem der Ansprüche 1 bis 3, **dadurch gekennzeichnet, dass**
eine Regelungseinrichtung die Geschwindigkeit der Fortbewegung der Aushärtevorrichtung durch den Auskleidungsschlauch (1) und/oder die Leistungsabgabe der Aushärtevorrichtung basierend auf der von der Temperaturmesseinrichtung erfassten Temperatur automatisiert regelt.

6. Verfahren nach einem der vorangehenden Ansprüche, **dadurch gekennzeichnet, dass** die Aushärtevorrichtung als Strahlungsquelle eine Gasentladungslampe, eine Kurzbogenlampe, eine Stroboskoplampe, eine Blitzlampe, Licht emittierende Dioden (LEDs), eine Bogenlampe, insbesondere eine Xenon-Lampe, und/oder einer Quecksilber-Xenon-Lampe umfasst, wobei insbesondere wobei das Leuchtmittel mindestens zehn Prozent (10%), insbesondere mindestens fünfzig Prozent (50%), der Strahlungsenergie in einem Wellenlängenbereich von 351 bis 800 nm, insbesondere in einem Bereich von 380 nm bis 800 nm, insbesondere in einem Bereich von 380 nm bis 700 nm, bevorzugt in einem Bereich von 390 nm bis 470 nm, oder in einem Bereich von 400 nm bis 800 nm, bereitstellt oder bereitstellen kann.

7. Verfahren nach einem der vorangehenden Ansprüche, **gekennzeichnet durch** ein Messen der Temperatur mittels der Temperaturmessvorrichtung (9) mittels mindestens eines Temperaturmesselements, welches sich entlang der Längsrichtung des Auskleidungsschlauchs (1)erstreckt, insbesondere von einem öffnungsseitigen Ende des Auskleidungsschlauchs (1)zu einem gegenüberliegenden öffnungsseitigen Ende des Auskleidungsschlauchs, so dass eine Temperatur an der Außenseite der aushärtbaren Lage (5), zumindest bereichsweise, entlang der gesamten Länge des Auskleidungsschlauchs (1)erfasst wird und/oder die Temperaturmessvorrichtung (9) mindestens zwei, insbesondere n, mit n = 1, 2, 3, 4, 5, 6, 7, 8, 9, 10 oder mehr, Temperaturmesselemente umfasst, welches entlang der Längsrichtung des Auskleidungsschlauchs (1)beabstandet zueinander angeordnet sind, insbesondere in einem regelmäßigen Abstand, wobei jedes der mindestens zwei Temperaturmesselemente die Temperatur an der Außenseite der aushärtbaren Lage (5) entlang eines Längsabschnitts des Auskleidungsschlauchs (1)erfasst oder erfassen kann, und wobei die Temperaturmessvorrichtung (9) insbesondere in den Auskleidungsschlauch (1) integriert ist, vorzugsweise zwischen der Außenseite der aushärtbaren Lage (5) und einer äußeren Schutzfolie.

8. Verfahren nach Anspruch 7, **dadurch gekennzeichnet, dass**
das Temperaturmesselement in Form eines Kabels, insbesondere in Form eines Flachbandkabels, vorzugsweise umfassend einen faseroptischen Sensor, ausgebildet ist.

9. Verfahren nach einem der Ansprüche 7 oder 8, **dadurch gekennzeichnet, dass**
das Flachbandkabel ein optisches Sensorkabel ausbildet, welches eine Kabelseele und einen Kabelmantel umfasst, wobei die Kabelseele einsbesondere einen Licht mit einer Wellenlänge in einem Bereich von 200 bis 480nm leitenden Lichtwellenleiter umfasst, der ein Coating aufweist, welches für Licht mit einer Wellenlänge in einem Bereich von 200 bis 480nm transparent ist und mantelseitig eingestrahltes Licht einkoppelt und in Längsrichtung weiterleitet, und wobei der Kabelmantel insbesondere einen im Querschnitt flachen Profilkörper ausbildet, in den der Lichtwellenleiter in der neutralen Phase des Kabelmantel eingebracht ist, und wobei der Kabelmantel einen transparenten Bereich aufweist, der lichtdurchlässig ist, ausgelegt und eingerichtet, um Licht von der Außenseite des Kabelmantel zum Lichtwellenleiter weiterzuleiten.

10. Verfahren nach einem der Ansprüche 7 bis 9, **dadurch gekennzeichnet, dass** der Lichtwellenleiter einen Kern aus Quarz, ein Cladding aus Fluor-dotiertem Quarz und ein Coating aus einem Kunststoff umfasst.

11. Verfahren nach einem der Ansprüche 7 bis 10, **dadurch gekennzeichnet, dass**
die Kabelseele einen zweiten Lichtwellenleiter umfasst, insbesondere beabstandet von dem ersten Lichtwellenleiter, der ausgelegt und eingerichtet zur Erfassung der Raman-Streuung bei einem faseroptischen Messverfahren ist, insbesondere umfassend einen Germanium-dotierten Faserkern.

12. Verfahren nach einem der vorangehenden Ansprüche, **dadurch**
**gekennzeichnet, dass**
die Temperaturmessvorrichtung (9) einen Lichtwellenleiter umfasst, der ausgelegt und eingerichtet zur Erfassung der Raman-Streuung bei einem faseroptischen Messverfahren ist, insbesondere umfassend einen Germanium-dotierten Faserkern.

13. Verfahren nach einem der vorangehenden Ansprüche, **gekennzeichnet durch** ein Übermitteln von Temperaturmesswerten des Temperaturmesselements mittels eines RFID-Transponders an eine Auswerteeinrichtung, wobei die Auswerteeinrichtung die Fortbewegung und/oder die Leistungsabgabe der Aushärtevorrichtung steuert oder regelt.

14. Verfahren nach einem der vorangehenden Ansprüche, **gekennzeichnet durch** ein Messen der Temperatur mitttels der Temperaturmesseinrichtung mittels einesTemperaturmesselements , welches piezoelektrische Kristalle aus Quarz und/oder Lithiumniobat mit lithographisch aufgebrachten Elektrodenstrukuren umfasst, die ein ankommendes Funksignal in eine Oberflächenwelle, die sich über den Kristall ausbreitet, umwandelt, und wobei die reflektierten Oberflächenwellen in ein elektrisches Signal zurückrückwandelbar sind oder zurückgewandelt werden, wobei eine Temperaturänderung zu einer definierten detektierbaren Änderung des reflektierten Signals führt, so dass in Reaktion auf einen Anfrageimpuls und der Impulsantwort eine Temperaturmessung erfolgen kann bzw. erfolgt.

15. Verfahren nach einem der vorangehenden Ansprüche, **gekennzeichnet durch** definieren mindestens eines ersten Schwellwerts für eine erste Temperatur und mindestens eines zweiten Schwellwerts, höher als der erste Schwellwert, für eine zweite Temperatur, wobei eine Geschwindigkeit der Fortbewegung der Aushärtevorrichtung durch den Auskleidungsschlauch (1) bei einem Unterschreiten des ersten Schwellwerts verringert wird und bei einem Überschreiten des zweiten Grenzwerts erhöht wird und/oder die Leistungsabgabe der Aushärtevorrichtung bei einem Unterschreiten des ersten Grenzwerts erhöht und bei einem Überschreiten des zweiten Grenzwerts verringert wird.

16. Verfahren nach Anspruch 15, **gekennzeichnet durch**,
die Schwellwerte in Abhängigkeit des auszuhärtenden Auskleidungsschlauchs, insbesondere in Abhängigkeit des Durchmessers der auszuhärtenden Lage (5) des Auskleidungsschlauchs, festgelegt werden.

17. Verfahren nach einem der vorangehenden Ansprüche, **gekennzeichnet durch** ein Fortbewegen der Aushärtevorrichtung mittels eines Kabels, insbesondere eines Kabels umfassen Kevlarfasern und/oder mindestens ein Zugseil, und/oder Zugseils, insbesondere mit einer Geschwindigkeit des Vortriebs in einem Bereich von 5 cm/min bis 200 cm/min.

## Claims

1. Method for rehabilitating lines, in particular sewers, shafts, or the like, comprising the following method steps, in particular in this sequence:
a. Inserting a lining sleeve (1) into the line, wherein the lining sleeve (1) comprises at least one curable ply (5) that can be cured and/or cures by activation and also an outer film (7) arranged on the outside around the curable ply (5), wherein the lining sleeve (1) comprises at least one temperature measuring device (9) that is designed and set up to measure a temperature on the outer side of the curable ply (5) at a multiplicity of measuring points and/or continuously, and is arranged between the curable ply (5) and the outer film (7);
b. Introducing a curing device comprising a radiation source, with which the curing of the curable ply (5) is activated, into the lining sleeve;
c. Expanding the lining sleeve, in particular by means of a fluid, preferably compressed air, so that the lining sleeve (1) lies against the inner wall of the line;
d. Advancing the curing device through the line system, wherein the curing device is activated or has been activated for curing the curable and/or curing ply (5), and wherein the advancement of the curing device in the lining sleeve (1) and/or the power output of the radiation source of the curing device is controlled in an open-loop or closed-loop manner depending on the temperature measured by the temperature measuring device (9) on the outer side of the curable ply (5).

2. Method according to Claim 1, **characterized by**
displaying a graphic representation 1ft he temperature measured by the temperature measuring device (9) on a display device, wherein in particular a first graphic representation is displayed for a first temperature when the lining sleeve (1) is not yet cured, and a second graphic representation is displayed when the lining sleeve (1) is cured.

3. Method according to Claim 2, **characterized in that**
a graphic representation of the temperature at each measuring point of the multiplicity of measuring points is displayed, in particular of those measuring points in the active range of the curing device and/or around the active range of the curing device.

4. Method according to any one of Claims 2 or 3, **characterized in that**
a user controls the rate of advancement and/or the power output of the radiation source based on the at least one graphic representation.

5. Method according to any one of Claims 1 to 3, **characterized in that**
a control device automatically controls the rate of advancement of the curing device through the lining sleeve (1) and/or the power output of the curing device based on the temperature measured by the temperature measuring device (9).

6. Method according to any one of the preceding claims, **characterized in that** the curing device comprises as a radiation source a gas discharge lamp, a short arc lamp, a stroboscope lamp, a flash lamp, light-emitting diodes (LEDs), an arc lamp, in particular a xenon lamp, and/or a mercury-xenon lamp, wherein in particular the lighting means provide or can provide at least ten percent (10%), in particular at least fifty percent (50%), of the radiation energy in a wavelength range from 351 to 800 nm, in particular in a range from 380 nm to 800 nm, in particular in a range from 380 nm to 700 nm, preferably in a range from 390 nm to 470 nm, or in a range from 400 nm to 800 nm.

7. Method according to any one of the preceding claims, **characterized by** measuring the temperature by means of the temperature measuring device (9) by means of at least one temperature measuring element, which extends along the longitudinal direction of the lining sleeve (1), in particular from one opening-side end of the lining sleeve (1) to an opposite opening-side end of the lining sleeve, so that a temperature on the outer side of the curable ply (5), at least in some regions, is measured along the entire length of the lining sleeve (1), and/or the temperature measuring device (9) comprises at least two, in particular n, with n = 1, 2, 3, 4, 5, 6, 7, 8, 9, 10 or more, temperature measuring elements, which are arranged spaced apart from each other along the longitudinal direction of the lining sleeve (1), in particular at a regular distance, wherein each of the at least two temperature measuring elements measures the temperature on the outer side of the curable ply (5) along a longitudinal section of the lining sleeve (1) or can measure it, and wherein the temperature measuring device (9) is integrated in particular in the lining sleeve (1), preferably between the outer side of the curable ply (5) and an outer protective film.

8. Method according to Claim 7, **characterized in that**
the temperature measuring element is in the form of a cable, in particular in the form of a flat ribbon cable, preferably comprising an optical sensor.

9. Method according to any one of Claims 7 or 8, **characterized in that**
the flat ribbon cable forms an optical sensor cable, which comprises a cable core and a cable sheath, wherein the cable core in particular comprises a light-conducting optical fiber conducting light with a wavelength in a range from 200 to 480 nm, which has a coating that is transparent for light with a wavelength in a range from 200 to 480 nm and couples in light irradiated on the sheath side and continues to guide it in the longitudinal direction, and wherein the cable sheath in particular forms a flat-profiled body in cross-section, into which the optical fiber is introduced in the neutral phase of the cable sheath, and wherein the cable sheath has a transparent region that is transparent to light, designed and set up to guide light from the outer side of the cable sheath to the optical fiber.

10. Method according to any one of Claims 7 to 9, **characterized in that**
the optical fiber comprises a core of quartz, a cladding of fluorine-doped quartz, and a coating of a plastic.

11. Method according to any one of Claims 7 to 10, **characterized in that**
the cable core comprises a second optical fiber, in particular spaced apart from the first optical fiber, which is designed and set up to detect Raman scattering in a fiber-optic measurement method, in particular comprising a germanium-doped fiber core.

12. Method according to any one of the preceding claims, **characterized in that** the temperature measuring device (9) comprises an optical fiber that is designed and set up to detect Raman scattering in a fiber-optic measurement method, in particular comprising a germanium-doped fiber core.

13. Method according to any one of the preceding claims, **characterized by** transmitting temperature measurement values of the temperature measuring element by means of an RFID transponder to an evaluation device, wherein the evaluation device controls or regulates the advancement and/or the power output of the curing device.

14. A method according to any of the preceding claims, **characterized by** measuring the temperature using the temperature measuring device by means of a temperature measuring element comprising piezoelectric crystals made of quartz and/or lithium niobate with lithographically applied electrode structures that convert an incoming radio signal into a surface wave propagating over the crystal, and wherein the reflected surface waves can be converted back into an electrical signal or are converted back, wherein a temperature change leads to a defined detectable change in the reflected signal, so that a temperature measurement can be performed or is performed in response to a request pulse and the impulse response.

15. A method according to any of the preceding claims, **characterized by** defining at least a first threshold for a first temperature and at least a second threshold, higher than the first threshold, for a second temperature, wherein a speed of movement of the curing device through the lining hose (1) is reduced when the first threshold is undershot and increased when the second threshold is exceeded, and/or the power output of the curing device is increased when the first threshold is undershot and decreased when the second threshold is exceeded.

16. A method according to claim 15, **characterized in that** the thresholds are determined depending on the lining hose to be cured, in particular depending on the diameter of the curing layer (5) of the lining hose.

17. A method according to any of the preceding claims, **characterized by** moving the curing device by means of a cable, in particular a cable comprising Kevlar fibers and/or at least one traction cable, and/or a traction cable, in particular with a propulsion speed in a range of 5 cm/min to 200 cm/min.

## Revendications

1. Procédé de réhabilitation de conduites, notamment de canaux, puits ou analogues, ledit procédé comprenant les étapes suivantes, notamment dans l'ordre suivant:
a. Insérer un tuyau de revêtement (1) dans la conduite, le tuyau de revêtement (1) comprenant au moins une couche durcissable et/ou durcissante (5) par activation et un film extérieur (7) disposé autour de la couche durcissable (5), le tuyau de revêtement (1) comprenant au moins une unité de mesure de température (9), conçue et agencée pour mesurer la température à l'extérieur de la couche durcissable (5) en un grand nombre de points de mesure et/ou en continu, et disposée entre la couche durcissable (5) et le film extérieur (7) ;
b. Introduire dans le tuyau de revêtement un dispositif de durcissement comprenant une source de rayonnement permettant d'activer le durcissement de la couche durcissable (5) ;
c. Expanser le tuyau de revêtement, notamment au moyen d'un fluide, de préférence de l'air comprimé, de sorte que le tuyau de revêtement (1) vienne en appui sur la paroi intérieure de la conduite ;
d. Faire progresser le dispositif de durcissement à travers le système de conduites, le dispositif de durcissement étant activé ou pouvant être activé afin de faire durcir la couche (5) qui est en cour de durcissement et/ou qui peut être durcie, et la progression du dispositif de durcissement dans le tuyau de revêtement (1) et/ou la puissance de sortie de la source de rayonnement du dispositif de durcissement étant commandée ou régulée en fonction de la température enregistrée par l'unité de mesure de température sur le côté extérieur de la couche durcissable (5).

2. Procédé selon la revendication 1, **caractérisé par** l'affichage d'une représentation graphique de la température enregistrée par une unité de mesure de température, sur une unité d'affichage, une première représentation graphique étant notamment affichée pour une première température pour laquelle le tuyau de revêtement (1) n'a pas encore durci et une deuxième représentation graphique étant affichée lorsque le tuyau de revêtement (1) a durci.

3. Procédé selon la revendication 2, **caractérisé en ce qu'**une représentation graphique de la température est affichée à chaque point de mesure de la pluralité de points de mesure, notamment des points de mesure situés dans la zone d'action du dispositif de durcissement et/ou autour de la zone d'action du dispositif de durcissement.

4. Procédé selon l'une des revendications 2 ou 3, **caractérisé en ce qu'**un utilisateur commande la vitesse de progression et/ou la puissance de sortie de la source de rayonnement à l'aide d'au moins une représentation graphique.

5. Procédé selon l'une des revendications 1 à 3, **caractérisé en ce qu'**une unité de régulation régule automatiquement la vitesse de progression du dispositif de durcissement à travers le tuyau de revêtement (1) et/ou la puissance de sortie du dispositif de durcissement sur la base de la température enregistrée par l'unité de mesure de température.

6. Procédé selon l'une des revendications précédentes, **caractérisé en ce que** le système de durcissement comprend comme source de rayonnement une lampe à décharge gazeuse, une lampe à arc court, une lampe stroboscopique, une lampe flash, des diodes électroluminescentes (LED), une lampe à arc, en particulier une lampe au xénon, et/ou une lampe au mercure-xénon, en particulier le moyen d'éclairage fournissant ou pouvant fournir en particulier au moins dix pour cent (10 %), en particulier au moins cinquante pour cent (50%) de l'énergie rayonnante comprise dans une gamme de longueurs d'onde de 351 à 800 nm, en particulier dans une gamme de 380 nm à 800 nm, en particulier dans une gamme de 380 nm à 700 nm, de préférence dans une gamme de 390 nm à 470 nm, ou dans une gamme de 400 nm à 800 nm.

7. Procédé selon l'une des revendications précédentes, **caractérisé par** une mesure de la température au moyen du dispositif de mesure de température (9) au moyen d'au moins un élément de mesure de la température qui s'étend le long de la direction longitudinale du tuyau de revêtement (1), en particulier d'une extrémité du côté d'ouverture du tuyau de revêtement (1) à une extrémité opposée du côté d'ouverture du tuyau de revêtement, de sorte qu'une température à l'extérieur de la couche durcissable (5) est déterminée, au moins par zones, sur toute la longueur du tuyau de revêtement (1) et/ou le dispositif de mesure de la température (9) comprend au moins deux éléments de mesure de la température, notamment n, avec n= 1, 2, 3, 4, 5, 6, 7, 8, 9, 10 ou plus, qui sont espacés l'un de l'autre dans le sens de la longueur du tuyau de revêtement (1), notamment à intervalles réguliers, dans lequel chacun des au moins deux éléments de mesure de température enregistre ou peut enregistrer la température à l'extérieur de la couche durcissable (5) le long de la direction longitudinale du tuyau de revêtement (1), et dans lequel le dispositif de mesure de température (9) est notamment intégré dans le tuyau de revêtement (1), de préférence entre l'extérieur de la couche durcissable (5) et un film extérieur de protection.

8. Procédé selon la revendication 7, **caractérisé en ce que** l'élément de mesure de température se présente sous la forme d'un câble, notamment d'un câble plat, comprenant de préférence un capteur à fibre optique.

9. Procédé selon les revendications 7 ou 8, **caractérisé en ce que** le câble plat, en tant que câble de capteur optique, comprend une âme de câble et une gaine de câble, l'âme de câble comprenant notamment une fibre optique conduisant la lumière avec une longueur d'onde comprise dans une gamme de 200 à 480 nm et ayant un revêtement transparent à la lumière avec une longueur d'onde comprise dans une gamme entre 200 et 480nm et couplant la lumière irradiée sur le côté coque et la transmet dans le sens longitudinal, et dans lequel la gaine de câble forme un corps profilé de section plane dans lequel le guide d'onde optique est inséré dans la phase neutre de la gaine de câble, et dans lequel la gaine de câble a une zone transparente qui transmet la lumière, conçue et agencée pour conduire la lumière de l'extérieur de la gaine de câble à la fibre optique.

10. Procédé selon l'une des revendications 7 à 9, **caractérisé en ce que** le câble à fibre optique se compose d'un coeur en quartz, d'une gaine en quartz dopé au fluor et d'un revêtement en plastique.

11. Procédé selon l'une des revendications 7 à 10, **caractérisé en ce que** l'âme de câble comprend un second câble à fibre optique, notamment espacé du premier câble à fibre optique, conçu et configuré pour détecter la diffusion Raman lors d'un procédé de mesure par fibre optique, comprenant notamment une âme en fibre dopée au germanium.

12. Procédé selon l'une des revendications précédentes, **caractérisé en ce que** le dispositif de mesure de température (9) comprend un câble à fibre optique, conçu et configuré pour détecter la diffusion Raman lors d'un précédé de mesure par fibre optique, comprenant notamment une âme en fibre dopée au germanium.

13. Procédé selon l'une des revendications précédentes, **caractérisé en ce que** l'élément de mesure de température transmet les relevés de température à l'aide d'un transpondeur RFID vers un dispositif d'évaluation, lequel dispositif d'évaluation contrôle ou régule la progression et/ou la puissance de sortie du dispositif de durcissement.

14. Procédé selon l'une des revendications précédentes, **caractérisé par** la mesure de la température au moyen de l'unité de mesure de température grâce à un élément de mesure de la température comprenant des cristaux piézoélectriques constitués de quartz et/ou de niobate de lithium avec des structures d'électrodes appliquées par lithographie qui convertissent un signal radio entrant en une onde de surface qui se propage sur le cristal, et les ondes de surface réfléchies peuvent être converties ou reconverties en un signal électrique. Un changement de température conduit de ce fait à un changement défini et détectable du signal réfléchi, de sorte qu'une mesure de température peut avoir lieu ou a lieu suite à une impulsion de demande et à l'impulsion réponse.

15. Procédé selon l'une des revendications précédentes, **caractérisé par** la définition d'au moins une première valeur de seuil pour une première température et au moins une deuxième valeur de seuil, supérieure à la première valeur de seuil, pour une seconde température, la vitesse de déplacement du dispositif de durcissement à travers le tuyau de revêtement (1) étant réduite lorsque la première valeur de seuil n'est pas atteinte et étant augmentée lorsque la seconde valeur de seuil est dépassée et/ou la puissance de sortie du dispositif de durcissement étant augmentée lorsque la première valeur de seuil n'est pas atteinte et étant réduite lorsque la deuxième valeur de seuil est dépassée.

16. Procédé selon la revendication 15, **caractérisé par** les valeurs seuils définies en fonction du tuyau de revêtement à durcir, notamment en fonction du diamètre de la couche durcissante (5) du tuyau de revêtement.

17. Procédé selon l'une des revendications précédentes, **caractérisé par** un déplacement du dispositif de durcissement au moyen d'un câble, en particulier d'un câble comprenant des fibres de Kevlar et/ou au moins un câble de traction, et/ou d'un câble de traction, en particulier à une vitesse d'avancement comprise dans une plage de 5 cm/min. à 200 cm/min.
